# EUROPÄISCHE PATENTSCHRIFT

(11) **EP 2 420 167 B1**
(45) Veröffentlichungstag und Bekanntmachung des Hinweises auf die Patenterteilung: **23.01.2013**
(21) Anmeldenummer: 11165732.6
(22) Anmeldetag: 11.05.2011
(51) Int. Cl.: A47J 37/07, A47B 43/04

(54) **Faltschrank**
Collapsible cabinet
Armoire pliante

(30) Priorität: 16.08.2010 DE 202010008287 U
(43) Veröffentlichungstag der Anmeldung: 22.02.2012
(73) Patentinhaber: Fritz Berger GmbH, 92318 Neumarkt (DE)
(72) Erfinder: Haas, Wolfgang, 53804, Much (DE)
(74) Vertreter: Hoppe, Lars

(56) Entgegenhaltungen:
- DE-U1- 9 413 886
- US-A- 5 273 142
- US-A1- 2007 227 990

## Beschreibung

Die vorliegende Erfindung betrifft einen Faltschrank aus textilem Material mit mindestens drei, mindestens im Einbauzustand schlaufenförmigen Verbindern zu je einem Bein eines Tragrahmens, wobei die jeweiligen Verbinder von den Beinen durchsetzbar sind. Des Weiteren betrifft die Erfindung einen Grill, insbesondere Camping-Grill, vorzugsweise mit einem Unterbau, der mit einem gattungsgemäßen Faltschrank ausgestattet ist.

Zumeist finden Faltschränke aus textilem Material in beengten Räumlichkeiten, wie Bädern oder Abstellkammern, Anwendung. Auf Grund ihres einfachen und schnellen Auf- und Abbaus kommen Faltschränke aber auch bei zeitlich begrenztem Stauraumbedarf zum Einsatz, insbesondere auf Reisen oder beim Camping.

Im Bereich der Camping-Möbel sind, beispielsweise von der Anmelderin, Schränke bekannt, die aus einem Tragrahmen aus Rundrohren und einem darin mittels schlaufenförmigen Verbindern aufgespannten Faltschrank bestehen. Dabei dient der Tragrahmen lediglich als Stützelement zur Formgebung des Faltschrankes.

Siehe die Druckschrift US-A-20070227990.

Des Weiteren sind, insbesondere im Bereich der Camping- oder Gartenmöbel, Tragrahmen für Tische, Stühle oder andere Möbel allgemein bekannt. Die an solchen Tragrahmen angeordneten Beine sind auf Grund der für das Möbel geforderten Mobilität oftmals unterdimensioniert. Dies gilt auch für die Verbindung zwischen Tragrahmen und Bein. Als Konsequenz daraus sind hochmobile Camping- und Gartenmöbel meist sehr filigran und nur minder belastbar. Unter der instabilen Statik leidet insbesondere die Standfestigkeit der Möbel, was im Extremfall zu Sachschäden oder Körperverletzungen führen kann.

Der Erfindung liegt daher die Aufgabe zu Grunde, einen Faltschrank der eingangs genannten Art zu schaffen, der zusätzlichen, vor Umwelteinflüssen geschützten Stauraum bereitstellt, die Standsicherheit des Tragrahmens erhöht und an Tragrahmen mit unterschiedlicher Geometrie anpassbar ist.

Zur Lösung dieser Aufgabe schlägt die Erfindung vor, dass die Verbinder eine vertikal geneigte, die Standsicherheit des Tragrahmens vergrößernde Anordnung der Beine durch angepasste wirksame Längen der Verbinder ermöglichend sind, wobei die wirksame Länge jedes Verbinders separat einstellbar ist. Mittels einer nach unten und außen abgespreizten Anordnung der Beine vergrößert sich die Standfläche und somit die Standfestigkeit des Tragrahmens, jedoch bedingt diese Anordnung eine erhebliche Biegebelastung für die ohnehin nur mäßig stabile Verbindung zwischen Tragrahmen und Bein. In der Gesamtschau wird der positive Effekt der Standflächenvergrößerung auf die Standfestigkeit des Tragrahmens durch die neu hinzukommende Biegebelastung aufgehoben. Mit großem Vorteil neutralisiert der erfindungsgemäße Faltschrank diese Belastung, indem er durch die geometrische Ausdehnung des Faltschrankes in Verbindung mit den wirksamen Längen der Verbinder eine äußere Schranke für die Beine bildend und somit die Beine des Tragrahmens gegen übermäßiges Spreizen sichernd ist. In der Folge kommt der positive Effekt der Standflächenvergrößerung auf die Standfestigkeit des Tragrahmens voll zum Tragen.

Darüber hinaus ist die eigentliche Aufgabe eines Faltschrankes, nämlich die Bereitstellung von geschütztern Stauraum, vollumfänglich erfüllt.

Es erweist sich als erfindungsgemäß besonders vorteilhaft, dass die wirksame Länge jedes Verbinders separat einstellbar ist. Somit ist der Faltschrank unabhängig von der speziellen Geometrie von Tragralmen und Beinen einsetzbar, da je nach Länge und Breite des Tragrahmens oder Abspreizwinkel zwischen Tragrahmen und Bein unterschiedliche Verbinderlängen für den Einbau des Faltschrankes ermöglicht sind.

Mit großem Vorteil ist erfindungsgemäß vorgesehen, dass beide Enden oder eines der zwei Enden oder jeweils eines der zwei Enden von zwei miteinander korrespondierenden Hälften eines Verbinders am Faltschrank unlösbar befestigt ist. Die erreichte Flexibilität hinsichtlich der Anordnung keiner oder einer Öffnung des schlaufenförmigen Verbinders ermöglicht neben permanent geschlossenen auch Verbinder, die geöffnet werden können, wobei die Öffnung direkt am Faltschrank, zum Beispiel mittels eines Klettverschlusses oder Druckknopfes, oder auf der dem Faltschrank abgewandten Seite des Beins angeordnet sein kann. Letzteres erleichtert die Handhabung, insbesondere bei zu verknotenden Verbinderhälften aus Band- oder Seilmaterial. Faltschränke mit nicht permanent geschlossenen Verbindern können selbst nach der Montage der Beine am Tragrahmen noch an den Beinen angeordnet werden.

Darüber hinaus ist erfindungsgemäß angedacht, dass ein, zwei oder mehrere Verbinder pro Bein am Faltschrank angeordnet sind. Hiermit ist selbst bei großer Beladung des Faltschrankes dessen Maßhaltigkeit und Formstabilität im Einbauzustand gewährleistet, was insbesondere bei der Verwahrung von zerbrechlichen oder auslaufgefährdeten Utensilien, wie beispielsweise Gläsern, Porzellan oder offenen Behältnissen, geboten ist. Maximale Formstabilität wird durch einen einzigen, aber in seiner Breite das Bein in dessen gesamter Länge umfassenden Verbinder erreicht.

Als erfindungsgemäß besonders vorteilhaft erweist sich, dass der Faltschrank eine, mittels eines Reißverschlusses, insbesondere Zwei-Wege-Reißverschlusses, schließbare Zugangsöffnung zu seinem Innenraum aufweist. Diese an textilem Material einfach befestigbare und kostengünstige Variante einer Zugangsöffnung vereint einfache Handhabung und hohe Verschlusssicherheit und -dichtigkeit des Faltschrankes gegen Ungeziefer, Schmutz und Feuchtigkeit.

In einer alternativen Ausgestaltung der Erfindung ist vorgesehen, dass der Faltschrank nach oben offen ausgebildet ist. Diese somit korbähnliche Form des Faltschrankes weist eine permanent vorhandene Zugriffsmöglichkeit von oben auf, die insbesondere bei häufigem Zugriff auf den Innenraum die Anwenderfreundlichkeit deutlich erhöht. Des Weiteren ist durch die oben offene Ausgestaltung des Faltschrankes der Abstand zwischen dem Faltschrankmaterial und dem Tragrahmen vergrößert. Dies erweist sich als erfindungsgemäß besonders vorteilhaft, wenn der Tragrahmen das Faltschrankmaterial beschädigend ist, zum Beispiel durch von ihm ausgehende Hitzeeinwirkung.

Mit großem Vorteil ist erfindungsgemäß bereits berücksichtigt, dass der Tragrahmen ein Unterbau eines Grills, insbesondere eines Camping-Grills mit drei, vier oder mehr Beinen, ist. Hierdurch lässt sich der Faltschrank problemlos unter einen Grill, insbesondere Camping-Grill, einbauen. Dieser Einbau kann nachträglich erfolgen. Ein Nachrüsten eines bereits existierenden, beliebig gearteten gattungsgemäßen Grills gestaltet sich auf Grund der Flexibilität hinsichtlich der Verbinder und der damit gewonnenen universellen Kompatibilität als problemlos.

Für den Fall, dass der Unterbau des Grills gleichzeitig die Funktion der Glutwanne erfüllt, ist es besonders zweckmäßig, dass der Abstand zwischen dem Faltschrank und dem Unterbau des Grills stufenlos verstellbar ist. Diese Verstellbarkeit wird durch die Änderung der wirksamen Längen der Verbinder bewirkt und erlaubt eine Vergrößerung des Abstandes durch Absenken des Faltschrankes bei starker Erhitzung des Unterbaus zum Schutz des Faltschrankes und der darin enthaltenen Güter.

In diesem Zusammenhang ist erfindungsgemäß besonders vorteilhaft vorgesehen, dass das textile Material hitzebeständig ist. Selbst bei geringem Abstand zwischen dem Faltschrank und dem Unterbau des Grills bleibt der Faltschrank intakt und erfüllt seine Aufgaben, nämlich die Bereitstellung von Stauraum bei gleichzeitiger Erhöhung der Standsicherheit des Grills, weiterhin zuverlässig. Unfallträchtige Stabilitätseinbußen des Grills werden allzeit vermieden.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Die Figuren der Zeichnung zeigen im Einzelnen:
- Fig. 1: eine perspektivische, schematische Frontansicht des erfindungsgemäßen Faltschrankes und des erfindungsgemäßen Grills, wobei der Faltschrank in den Grill eingebaut ist, und
- Fig. 2: eine perspektivische, schematische Seitenansicht des erfindungsgemäßen Faltschrankes und des erfindungsgemäßen Grills, wobei der Faltschrank in den Grill eingebaut ist.

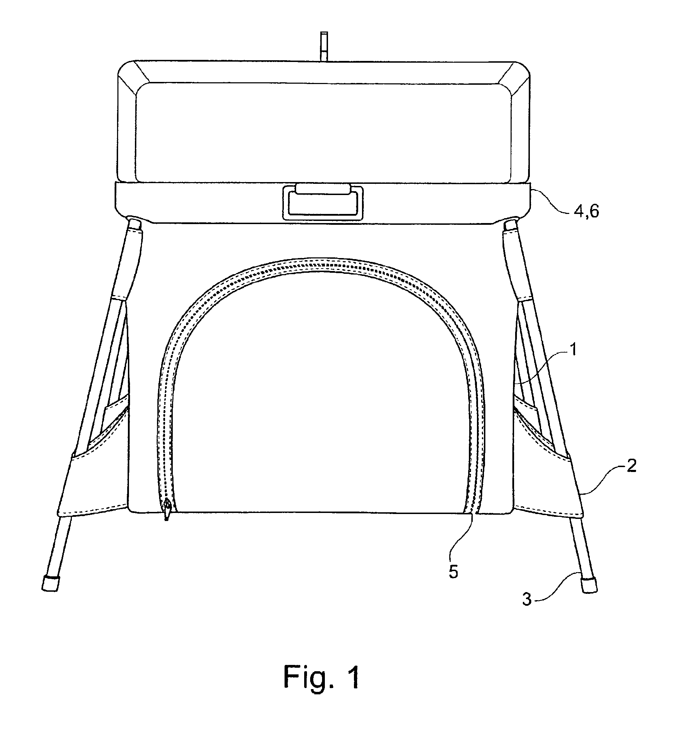

In **Fig. 1** ist der erfindungsgemäße Faltschrank 1 in Kombination mit dem erfindungsgemäßen Grill in Frontansicht und bei geöffnetem Unterbau 6 dargestellt. Der quaderförmige Faltschrank 1 besteht aus textilem Material,
wobei diese Ausführungsform aus Kunstfasergewebe, insbesondere aus Polyester und Polyamid, aufgebaut ist. Des Weiteren ist der Einsatz von hitzebeständigerem Material, insbesondere von Keramikfasern, und/oder einer Aluminiumbeschichtung für das Kunstfasergewebe erfindungsgemäß. Die einzelnen den Grundkörper des Faltschrankes 1 bildenden Materialbahnen sind miteinander vernäht. Aus **Fig. 1** nicht ersichtlich ist, dass die Nähte auf der Innenseite abgeklebt und somit gedichtet sind. Am Faltschrank 1 sind insgesamt acht permanent geschlossene, entgegen der Erfindung nicht längeneinstellbare, aber unterschiedlich lange,
schlaufenförmige Verbinder 2 angenäht, die aus besonders abriebfestem Cordura-Nylon bestehen. Die vier am Faltschrank 1 unten angeordneten Verbinder 2 weisen eine größere wirksame Länge als die vier am Faltschrank 1 oben angeordneten Verbinder 2 auf. In der nicht dargestellten erfindungsgemässen Ausgestaltung der Erfindung sind die Verbinder 2 separat in ihrer wirksamen Länge verstellbar. An jeder der vier vertikalen Kanten des Faltschrankes 1 sind ein oberer und ein unterer Verbinder 2 angeordnet,
die von je einem der vier Beine 3 des Tragrahmens 4 des Grills durchsetzt sind. Die in **Fig. 1** gezeigten Beine 3 bestehen aus hohlen Aluminiumrundrohren mit einem aufgerollten Gewinde zur kraftschlüssigen Verbindung mit dem Tragrahmen 4 des Grills. Am unteren Ende weisen sie eine Abschlusskappe aus Kautschuk zur Schonung des Untergrundes und zur Vergrößerung des Haftreibungskoeffizienten zwischen der Abschlusskappe und dem Untergrund auf. Zum Öffnen und Verschließen des durch den Faltschrank 1 bereitgestellten und in der Regel abgeschlossenen Stauraumes dient ein Reißverschluss 5, bevorzugt ein Zwei-Wege-Reißverschluss. Bei dieser bevorzugten Ausführungsform entspricht der Tragrahmen 4 dem Unterbau 6 des Grills und besteht aus lackiertem Aluminium. Der Unterbau 6 weist an seiner Unterseite vier Gewindebohrungen zur kraftschlüssigen Verbindung mit den Beinen 3 auf.
Weitere Verbindungsarten, wie beispielsweise ein Bajonettverschluss,
sind denkbar. Die Achsen der Gewindebohrungen sind zur Unterseite des Unterbaus 6 nicht orthogonal orientiert, was in einer nach unten und
außen abgespreizten Anordnung der Beine 3 resultiert. Hierdurch vergrößert sich die Standfläche und somit die Standfestigkeit des Grills,
jedoch führt diese gespreizte Anordnung zu einer erheblichen Biegebelastung der Verbindung zwischen Unterbau 6 und Bein 3.
Insgesamt verursacht die Standflächenvergrößerung eine Reduktion der Standfestigkeit des Grills, da die Biegebelastung die Statik erheblich schwächt. Mit großem Vorteil neutralisiert der erfindungsgemäße Faltschrank 1 diese Biegebelastung und die durch die Vergrößerung der Standfläche anvisierte Erhöhung der Standfestigkeit des Grills ist besonders gegeben. Der Deckel des Unterbaus 6 ist mittels zweier Scharniere verschwenkbar ausgebildet. Im geöffneten Zustand ist der Unterbau 6 den Grill aufnehmend oder dient als dessen Glutwanne.

Um den Faltschrank in den Grill einzubauen, müssen die Beine 3 vom Unterbau 6 demontiert, durch die entsprechenden Verbinder 2 gefädelt und anschließend wieder am Unterbau 6 befestigt werden. In einer besonders vorteilhaften, in **Fig. 1** nicht gezeigten Ausgestaltung der Erfindung können die Verbinder 2 geöffnet werden. Die durch den Verbinder 2 ausgebildete Schlaufe zerfällt in eine offene Schlaufe oder in zwei Schlaufenhälften. In diesem Fall ist ein nachträglicher Einbau des Faltschrankes 1 in den bereits aufgebauten Grill ohne die Demontage der Beine 3 möglich. Falls der Faltschrank 1 in den Grill nicht eingebaut ist, lässt er sich auf Grund seines auf textilem Material beruhenden Aufbaus mit großem Vorteil platzsparend auf ein kleines Volumen zusammenfalten und verstauen.

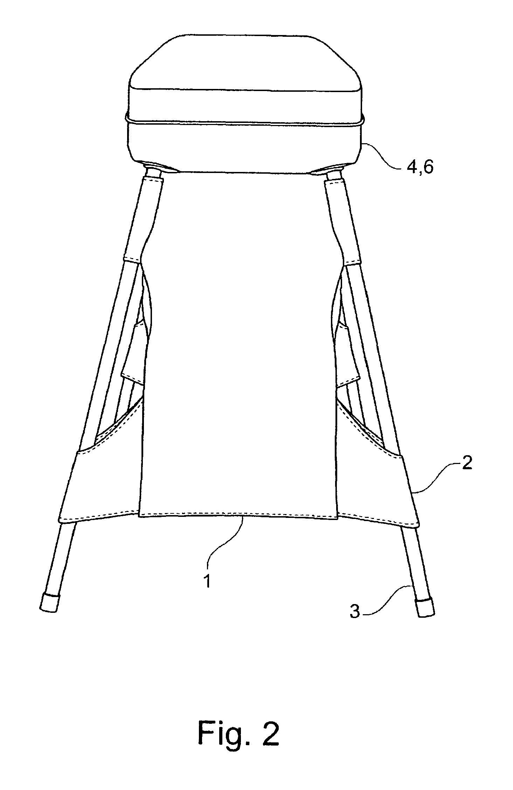

**Fig. 2** zeigt ebenfalls den erfindungsgemäßen Faltschrank 1 in Kombination mit dem erfindungsgemäßen Grill, jedoch in Seitenansicht und bei geschlossenem Unterbau 6. Hier wird die Spreizung der Beine 3 und die Begrenzung der Spreizung der Beine 3 durch den Faltschrank 1 in Verbindung mit den Verbindern 2 nochmals deutlich.

### BEZUGSZEICHENLISTE

- 1: Faltschrank
- 2: Verbinder
- 3: Bein
- 4: Tragrahmen
- 5: Reißverschluss
- 6: Unterbau

## Patentansprüche

1. Faltschrank (1) aus textilem Material mit mindestens drei, mindestens im Einbauzustand schlaufenförmigen Verbindern (2) zu je einem Bein (3) eines Tragrahmens (4), wobei die jeweiligen Verbinder (2) von den Beinen (3) durchsetzbar sind, **dadurch gekennzeichnet, dass** die Verbinder (2) eine vertikal geneigte, die Standsicherheit des Tragrahmens (4) vergrößernde Anordnung der Beine (3) durch angepasste wirksame Längen der Verbinder (2) ermöglichend sind, wobei die wirksame Länge jedes Verbinders (2) separat einstellbar ist.

2. Faltschrank (1) nach Anspruch 1, **dadurch gekennzeichnet, dass** beide Enden oder eines der zwei Enden oder jeweils eines der zwei Enden von zwei miteinander korrespondierenden Hälften eines Verbinders (2) am Faltschrank (1) unlösbar befestigt ist.

3. Faltschrank (1) nach Anspruch 1 oder 2, **dadurch gekennzeichnet, dass** ein, zwei oder mehrere Verbinder (2) pro Bein (3) am Faltschrank (1) angeordnet sind.

4. Faltschrank (1) nach einem der vorhergehenden Ansprüche, **dadurch gekennzeichnet, dass** der Faltschrank (1) eine, mittels eines Reißverschlusses (5), insbesondere Zwei-Wege-Reißverschlusses, schließbare Zugangsöffnung zu seinem Innenraum aufweist.

5. Faltschrank (1) nach einem der vorhergehenden Ansprüche, **dadurch gekennzeichnet, dass** der Faltschrank (1) nach oben offen ausgebildet ist.

6. Faltschrank (1) nach einem der vorhergehenden Ansprüche, **dadurch gekennzeichnet, dass** der Tragrahmen (4) ein Unterbau (6) eines Grills, insbesondere eines Camping-Grills mit drei, vier oder mehr Beinen (3), ist.

7. Faltschrank (1) nach Anspruch 6, **dadurch gekennzeichnet, dass** der Abstand zwischen dem Faltschrank (1) und dem Unterbau (6) des Grills stufenlos verstellbar ist.

8. Faltschrank (1) nach einem der vorhergehenden Ansprüche, **dadurch gekennzeichnet, dass** das textile Material hitzebeständig ist.

9. Grill, insbesondere Camping-Grill, vorzugsweise mit einem Unterbau (6), **dadurch gekennzeichnet, dass** der Grill mindestens einen Faltschrank (1) nach einem oder mehreren der vorhergehenden Ansprüche aufweist.

## Claims

1. A collapsible cabinet (1) made of textile material, comprising at least three connectors (2), which are loop-shaped at least in the installed state, in each case to one leg (3) of a support frame (4), wherein the respective connectors (2) can be interspersed with the legs (3), **characterized in that**, by means of adapted effective lengths of the connectors (2), the connectors (2) provide for a vertically inclined arrangement of the legs (3), which increases the stability of the support frame (4), wherein the effective length of each connector (2) can be adjusted separately.

2. The collapsible cabinet (1) according to claim 1, **characterized in that** both ends or one of the two ends or in each case one of the two ends of two halves of a connector (2), which correspond to one another, is non-detachably fastened to the collapsible cabinet (1).

3. The collapsible cabinet (1) according to claim 1 or 2, **characterized in that** one, two, or a plurality of connectors (2) for each leg (3) is arranged on the collapsible cabinet (1).

4. The collapsible cabinet (1) according to one of the preceding claims, **characterized in that** the collapsible cabinet (1) encompasses an access opening to its interior, which can be closed by means of a zipper (5), in particular a two-way zipper.

5. The collapsible cabinet (1) according to one of the preceding claims, **characterized in that** the collapsible cabinet (1) is embodied so as to be open towards the top.

6. The collapsible cabinet (1) according to one of the preceding claims, **characterized in that** the support frame (4) is a foundation (6) of a barbecue, in particular of a camping barbecue, comprising three, four or more legs (3).

7. The collapsible cabinet (1) according to claim 6, **characterized in that** the distance between the collapsible cabinet (1) and the foundation (6) of the barbecue can be adjusted continuously.

8. The collapsible cabinet (1) according to one of the preceding claims, **characterized in that** the textile material is heat-resistant.

9. A barbecue, in particular a camping barbecue, preferably comprising a foundation (6), **characterized in that** the barbecue encompasses at least one collapsible cabinet (1) according to one or a plurality of the preceding claims.

## Revendications

1. Armoire pliante (1) en matériau textile, comportant au moins trois connecteurs (2) en forme de boucles du moins en position montée pour chacun des pieds (3) d'un châssis (4), les pieds (3) pouvant traverser les connecteurs respectifs (2), **caractérisée en ce que** les connecteurs (2) permettent une disposition inclinée verticalement et augmentant la stabilité du châssis (4) des pieds (3) grâce à des longueurs utiles adaptées des connecteurs (2), la longueur utile de chaque connecteur (2) étant réglable séparément.

2. Armoire pliante (1) selon la revendication 1, **caractérisée en ce que** les deux extrémités ou une des deux extrémités ou respectivement une des deux extrémités de deux moitiés se correspondant mutuellement d'un connecteur (2) sont fixées de manière indissociable à l'armoire pliante (1).

3. Armoire pliante (1) selon la revendication 1 ou 2, **caractérisée en ce qu'**un, deux ou plusieurs connecteurs (2) par pied (3) sont disposés sur l'armoire pliante (1).

4. Armoire pliante (1) selon une des revendications précédentes, **caractérisée en ce que** l'armoire pliante (1) présente une ouverture d'accès vers son intérieur qui peut se fermer au moyen d'une fermeture éclair (5), en particulier au moyen d'une fermeture éclair à deux pistes.

5. Armoire pliante (1) selon une des revendications précédentes, **caractérisée en ce que** l'armoire pliante (1) a une conformation ouverte vers le haut.

6. Armoire pliante (1) selon une des revendications précédentes, **caractérisée en ce que** le châssis (4) est un soubassement (6) d'un grill, en particulier d'un grill de camping ayant trois, quatre pieds (3) ou plus.

7. Armoire pliante (1) selon la revendication 6, **caractérisée en ce que** la distance entre l'armoire pliante (1) et le soubassement (6) du grill est réglable progressivement.

8. Armoire pliante (1) selon une des revendications précédentes, **caractérisée en ce que** le matériau textile résiste à la chaleur.

9. Grill, en particulier grill de camping, comportant de préférence un soubassement (6), **caractérisé en ce que** le grill présente au moins une armoire pliante (1) selon une ou plusieurs des revendications précédentes.
